**Europäisches Patentamt**

**European Patent Office**

**Office européen des brevets**

(11) Numéro de publication : **0 445 000 B1**

(12) **FASCICULE DE BREVET EUROPEEN**

(45) Date de publication du fascicule du brevet :
**04.05.94 Bulletin 94/18**

(51) Int. Cl.$^5$ : **G01L 9/00**

(21) Numéro de dépôt : **91400459.3**

(22) Date de dépôt : **20.02.91**

(54) **Capteur d'une grandeur physique comprenant un résonateur mécanique.**

(30) Priorité : **27.02.90 FR 9002402**

(43) Date de publication de la demande :
**04.09.91 Bulletin 91/36**

(45) Mention de la délivrance du brevet :
**04.05.94 Bulletin 94/18**

(84) Etats contractants désignés :
**DE GB**

(56) Documents cités :
**FR-A- 2 380 546**

(73) Titulaire : **SEXTANT AVIONIQUE S.A.**
**5/7 rue Jeanne Braconnier Parc Tertiaire**
**F-92366 Meudon la Forêt Cédex (FR)**

(72) Inventeur : **Morbieu, Bertrand**
**20 rue Freycinet**
**F-26000 Valence (FR)**

(74) Mandataire : **Bloch, Gérard et al**
**2, square de l'Avenue du Bois**
**F-75116 Paris (FR)**

EP 0 445 000 B1

## Description

La présente invention à trait à des capteurs d'une grandeur physique, comprenant un résonateur mécanique mis en vibration et auquel est appliquée une contrainte représentative de la grandeur à mesurer.

Dans les capteurs de ce type, la valeur de la fréquence de résonance du résonateur varie en fonction de la contrainte qui lui est appliquée, la mesure de cette fréquence de résonance étant représentative de la grandeur physique à mesurer qui peut être notamment une pression, une accélération, une température.

Traditionnellement, le résonateur est réalisé en un matériau piézo-électrique pourvu d'électrodes alimentées à la fréquence de résonance, un asservissement électronique permettant d'entretenir cette résonance.

Les capteurs du type défini ci-dessus présentent les avantages combinés d'une grande stabilité et d'une grande précision et ils sont notamment utilisés dans le domaine aéronautique et principalement pour la mesure des pressions qui sont des paramètres à prendre en compte pour la détermination de paramètres de vol d'un aéronef, nécessaires à son pilotage.

L'évolution des techniques aéronautiques entraîne une multiplication du nombre de ces capteurs qui sont répartis en différents endroits de l'aéronef, au plus proche des prises de pression et leurs informations sont transmises par liaisons électriques jusqu'à l'organe d'exploitation, par exemple un calculateur de bord.

L'inconvénient majeur de ce type de capteur, à principe de fonctionnement interne électrique et à liaison électrique, réside dans leur susceptibilité aux rayonnements électromagnétiques, depuis le simple parasite, pouvant perturber l'information, jusqu'au coup de foudre ou l'impulsion électromagnétique (IEM) pouvant entraîner la destruction des organes vitaux de l'aéronef et ce, principalement, pour les nouvelles générations d'appareils à commandes de vol électriques.

Pour éliminer cet inconvénient, un certain nombre de réalisations visant à remplacer les conducteurs électriques par des fibres optiques ont déjà été proposées, permettant ainsi de déporter dans l'aéronef les moyens de commande et de mesure, notamment le circuit électrique d'oscillation du résonateur, et de procurer au capteur une isolation galvanique totale.

C'est ainsi qu'il est connu d'associer un transmetteur électro-optique à un capteur électrique traditionnel pour assurer la transmission de l'information.

C'est ainsi qu'il est également connu de procéder à une téléalimentation du capteur. L'énergie électrique nécessaire au fonctionnement d'un capteur provient d'une énergie lumineuse, transformée par une photodiode, et transmise par une première fibre optique. Le signal de mesure, après transformation par une diode émissive, est lui-même transmis par une seconde fibre optique.

C'est ainsi qu'il est encore connu d'utiliser directement une fibre optique comme organe capteur, cela étant par exemple réalisé dans les capteurs à microcourbures.

Ces dernières solutions présentent toutefois les inconvénients de conduire à des capteurs performants mais complexes et impliquant de toute manière une mise en oeuvre électrique du résonateur, ou à des capteurs de faibles qualités métrologiques les rendant incompatibles avec les performances requises.

La demanderesse a déjà proposé, dans une demande de brevet français non encore publiée, d'exciter le résonateur par un effet photothermique, procuré par un faisceau lumineux issu d'une diode émissive, un couplage thermoélastique, tel qu'enseigné par l'article "Electronics letters, April 29, 1982, Vol. 18, n 3, pages 381, 382", transformant l'énergie thermique en contrainte entraînant le résonateur en vibration et détection de la fréquence de résonance se fondant sur le principe de la bi-réfringence, après passage, à travers le résonateur, d'un faisceau lumineux de détection, non modulé à l'émission, et dont l'analyse est effectuée par un transducteur optoélectronique. Les résonateurs photoélastiques, ou photoacoustiques, de ce dernier type pourraient équiper un réseau de capteurs. Toutefois, les résonateurs du réseau ne pourraient pas être excités simultanément sans disposer, notamment de circuits électriques d'oscillation séparés, c'est-à-dire un pour chaque capteur.

La présente invention, qui vise à proposer un résonateur satisfaisant toutes les exigences rappelées ci-dessus s'appuye sur le concept encore légèrement différent d'oscillateur photoacoustique introduit dans l'article de R.M. Longdon et D.L. Dowé "Photoacoustic oscillator sensors, Proc. SPIE Conf. Fibre Optic Sensors II, The Hague, 1987, pp. 867-893". Il y est enseigné de former une cavité optique de Fabry Perot entre une face d'un résonateur et la sortie d'une fibre optique, le déplacement du résonateur dans le champ d'ondes stationnaires régnant dans la cavité optique provoquant une modulation d'intensité du rayonnement lumineux qui, a son tour, entretient les oscillations du résonateur.

Cependant, un tel résonateur présente encore l'inconvénient d'exiger un positionnement relatif du résonateur et de la fibre extrêmement précis.

Ces constatations étant faites, la demanderesse propose donc un capteur d'une grandeur physique, comprenant un résonateur mécanique, agencé pour être soumis à une contrainte mécanique représentative de la grandeur à mesurer, et des moyens pour faire osciller le résonateur et entretenir ses oscillations à une fréquence de résonance représentative de la grandeur à mesurer, caractérisé par le fait que le résonateur est réalisé en un matériau laser solide et lesdits moyens d'oscillation comprennent des moyens pour envoyer sur le résonateur-laser un faisceau lumineux continu de pompage.

Le résonateur du capteur de l'invention peut osciller par lui-même sous la seule action d'une excitation lumineuse continue - c'est un résonateur photoélastique autooscillant - et, de ce fait, on peut organiser un réseau de capteurs de l'invention, avec des moyens d'excitation et de mesure déportés, et qui satisfassent aux conditions requises énumérées plus haut.

Fonctionnellement, le faisceau lumineux continu de pompage, de longueur d'onde déterminée, provoque dans le résonateur un effet laser et donc l'émission aléatoire d'oscillations de relaxation à une pseudo-période déterminée, c'est-à-dire d'un bruit pseudopériodique. Ce bruit provoque, par couplage photoélastique, l'amorçage mécanique et met le résonateur en vibration, ce qui module l'effet laser. La modulation agit sur le résonateur pour entretenir ses oscillations qui, par couplage élasto-optique, réagissent sur le matériau laser pour moduler l'effet laser. Il s'agit d'un asservissement intérieur au résonateur : le capteur de l'invention intègre un oscillateur auto-entretenu. Lorsque le résonateur oscille, il émet par effet laser un flux modulé en intensité à la fréquence de résonance mécanique caractérisant la grandeur à mesurer.

De préférence, le faisceau continu est envoyé sur le résonateur par une fibre optique et des moyens de focalisation.

De préférence encore, l'axe du faisceau lumineux continu est perpendiculaire au plan de vibration du résonateur.

S'il s'agit d'un résonateur du type décrit dans le document FR-A-2 574 209, à poutre vibrant en flexion et comportant des masselottes d'inertie de découplage adjacentes aux extrémités de fixation de la poutre, il est préférable que le faisceau continu soit focalisé au voisinage d'une des masselottes, où la contrainte thermique produit une déformation maximale.

De préférence toujours, le matériau du résonateur est un cristal de grenat d'aluminium et d'yttrium (YAG) dopé au neodyme (Nd) et le faisceau continu est émis par une diode laser de pompage accordée sur une transition de la bande d'absorption de l'ion $Nd^{3+}$.

Avantageusement, le résonateur est recouvert de dépôts diélectrique dichroïques localisant l'effet laser.

L'invention sera mieux comprise à l'aide de la description suivante d'une forme de réalisation préférée, mais absolument pas limitative, du capteur de l'invention, en référence aux dessins annexés, sur lesquels

- la figure 1 représente une vue en perspective du capteur de l'invention;
- la figure 2 représente une vue en coupe d'une portion de la poutre vibrante du résonateur du capteur de la figure 1 et
- la figure 3 représente le schéma de l'équipement de pompage de la cavité laser du résonateur.

Le capteur comporte un bâti 1, supportant un résonateur laser 2 et un soufflet 3. Le bâti 1 est ici constitué d'un socle 4, d'une potence 5, et d'un bras 6 articulé, au moyen d'une charnière 7, sur la potence 5. Le résonateur 2 est fixé, ici par collage, à l'une 10 des extrémités du bras 6 et à l'extrémité libre 11 du socle 4, l'autre extrémité 8 du bras 6 étant solidaire du soufflet 3 destiné à être soumis, par une canalisation 9, à l'action d'une pression à mesurer.

Le résonateur 2 employé ici est un résonateur à poutre, ou lame, 12 vibrant en flexion, comportant, aux deux extrémités de la poutre, deux masselottes d'inertie de découplage 13, 14, réunies respectivement aux deux extrémités de fixation 15, 16 collées sur le bâti par des articulations souples 17, 18. Au plan de la forme, ce résonateur est parfaitement décrit dans le document FR-A-2 574 209.

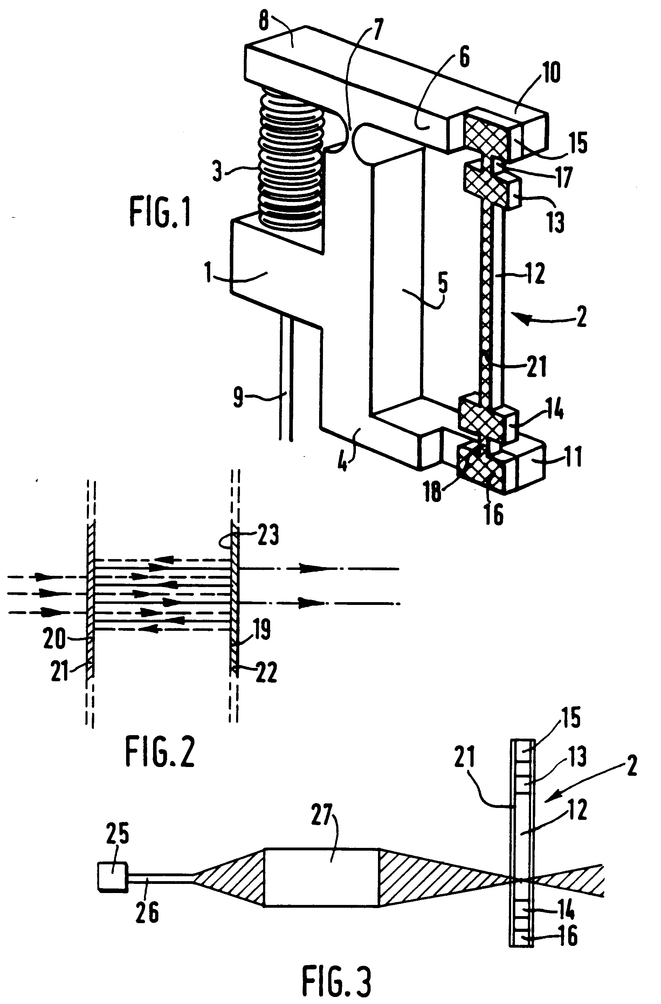

Le résonateur est constitué ici d'un cristal laser YAG dopé Nd, découpé par ultrasons. Les faces utiles du résonateur, celles de la poutre 12, sont la face 19, cachée sur la figure 1, dite face de sortie, s'étendant dans le plan de collage du bâti et la face opposée 20, dite face d'entrée destinée à recevoir un faisceau de pompage. Leur parallélisme, déterminant pour l'obtention de l'effet laser, a été vérifié par des méthodes interférentielles. Ces deux faces sont recouvertes de couches minces diélectriques dichroïques 21, 22, respectivement, permettant de réaliser une cavité laser. Dans l'exemple de capteur effectivement réalisé par la demanderesse, les caractéristiques de ces couches, selon qu'elles sont utilisées comme face d'entrée ou face de sortie, sont données dans le tableau ci-dessous, R étant le coefficient de réflexion, T le coefficient de transmission et $\lambda$ la longueur d'onde, d'émission de l'effet laser (1064 nm) ou de pompage (809 nm) :

| | λ nm | R % | T % |
|---|---|---|---|
| face d'entrée | 1064 | 99,9+0,5 | |
| | 810 | | 90 |
| face de sortie | 1064 | 99,7 | |
| | 810 | | 5 |

En référence à la figure 2, qui illustre schématiquement les trajets des faisceaux de pompage, en tirets, et d'émission laser, en trait plein, pour le faisceau de pompage, la couche diélectrique 21 recouvrant la face 20, dans un sens, celui du rayonnement émis par la source de pompage, est transparente et, dans l'autre sens, réfléchissante tout comme la couche diélectrique 22 recouvrant la face 19, pour confiner l'énergie de pompage le plus possible dans le cristal, le faisceau de pompage n'étant pas une composante utile du faisceau de sortie. Pour le faisceau laser, les deux couches diélectriques 21, 22 sont très réfléchissantes pour que le rayonnement laser soit confiné dans la cavité et puisse y être amplifié. La face de sortie 23 de la couche 22 doit toutefois et naturellement laisser passer une partie du rayonnement laser, en traits mixtes sur la figure.2.

La couche diélectrique 21, déposée sur la face 20 de la lame YAG 2, reçoit donc un faisceau de pompage incident émis par une diode laser 25, de longueur d'onde réglée sur une transition d'une bande d'absorption du milieu laser, en l'occurence 809 nm, ici véhiculé par une fibre optique 26, couplée à la diode, et focalisé par une lentille à gradient d'indice 27. La lame de YAG 2, placée dans le bon sens, est positionnée pour que la tache de focalisation soit située dans le cristal, proche de la tranche, et au voisinage, ici, de la masselotte 14, pour disposer de l'énergie maximale, et, de préférence, pour que la face d'entrée 20 du résonateur soit perpendiculaire au faisceau de pompage et que la cavité soit pompée longitudinalement. Le positionnement peut être effectué au moyen de tables micrométriques et d'un binoculaire. On notera qu'il serait possible de supprimer la lentille à gradient d'indice si la diode laser était contre le cristal, dans lequel serait alors crée un gradient d'indice de confinement du rayonnement.

Pour fixer les idées, dans le capteur décrit ci-dessus, la poutre vibrante du résonateur a une longueur de 4 mm et une épaisseur de 0,6 mm. La lentille 27 est distante de la fibre 26 de 1 mm et de la poutre 12 de 1,75 mm.

**Revendications**

1. Capteur d'une grandeur physique, comprenant un résonateur mécanique (2), agencé pour être soumis à une contrainte mécanique représentative de la grandeur à mesurer, et des moyens pour faire osciller le résonateur et entretenir ses oscillations à une fréquence de résonance représentative de la grandeur à mesurer, caractérisé par le fait que le résonateur (2) est réalisé en un matériau laser solide et lesdits moyens d'oscillation comprennent des moyens (25-27) pour envoyer sur le résonateur-laser un faisceau lumineux continu de pompage.

2. Capteur selon la revendication 1, dans lequel le faisceau continu est envoyé sur le résonateur (2) par une fibre optique (26) et des moyens de focalisation (27).

3. Capteur selon l'une des revendications 1 et 2, dans lequel l'axe du faisceau lumineux continu est perpendiculaire au plan de vibration du résonateur (2).

4. Capteur selon l'une des revendications 1 à 3, dans lequel le résonateur (2) comporte une poutre (12) vi-

4

brant en flexion et comportant des masselottes d'inertie de découplage (13, 14) adjacentes aux extrémités de fixation (15, 16) de la poutre (12) et le faisceau continu est focalisé au voisinage d'une (14) des masselottes, où la contrainte thermique produit une déformation maximale.

5. Capteur selon l'une des revendications 1 à 4, dans lequel le résonateur (2) est un cristal de grenat d'aluminium et d'yttrium (YAG) dopé au neodyme (Nd).

6. Capteur selon la revendication 5, dans lequel le faisceau continu est émis par une diode laser de pompage (25) accordée sur une transition de la bande d'absorption de l'ion $Nd^{3+}$.

7. Capteur selon l'une des revendications 1 à 6, dans lequel le résonateur (2) est recouvert de dépôts diélectriques dichroïques (21, 22) localisant l'effet laser.

## Patentansprüche

1. Meßfühler für eine physikalische Größe, umfassend einen mechanischen Resonator (2), dafür vorgesehen, einer mechanischen Beanspruchung ausgesetzt zu werden, welche die zu messende Größe repräsentiert, und Mittel, um den Resonator oszillieren zu lassen und seine Oszillationen bei einer Resonanzfrequenz, welche die zu messende Größe repräsentiert, aufrecht zu erhalten, dadurch gekennzeichnet, daß der Resonator (2) aus einem Festkörperlaser-Material besteht und die Mittel zur Oszillation Mittel (25-27) umfassen, um auf den als Resonator dienenden Laser ein kontinuierliches Pump-Lichtbündel auftreffen zu lassen.

2. Meßfühler nach Anspruch 1, bei dem das kontinuierliche Lichtbündel mittels einer Lichtleitfaser (26) und Fokussiermitteln (27) auf den Resonator (2) geschickt wird.

3. Meßfühler nach einem der Ansprüche 1 und 2, bei dem die Achse des kontinuierlichen Lichtbündels senkrecht zur Schwingungsebene des Resonators (2) ist.

4. Meßfühler nach einem der Ansprüche 1 bis 3, bei dem der Resonator (2) einen Stab (12) umfaßt, der Biegeschwingungen durchführt und Trägheits-Fliehgewichte zur Entkopplung (13, 14) aufweist, die nahe den Befestigungsenden (15, 16) des Stabs (12) angeordnet sind, und das kontinuierliche Lichtbündel in die Nähe eines (14) der Fliehgewichte fokussiert wird, wo die thermische Beanspruchung eine maximale Deformation hervorruft.

5. Meßfühler nach einem der Ansprüche 1 bis 4, bei dem der Resonator (2) ein Granatkristall aus Aluminium und Yttrium (YAG) ist, der mit Neodym (Nd) dotiert ist.

6. Meßfühler nach Anspruch 5, bei dem das kontinuierliche Lichtbündel von einer Laserpumpdiode (25) ausgesendet wird, die auf einen Übergang der Absorptionsbande des $Nd^{3+}$-Ions abgestimmt ist.

7. Meßfühler nach einem der Ansprüche 1 bis 6, bei dem der Resonator (2) mit dichroitischen, dielektrischen Schichten (21, 22) überzogen ist, welche den Lasereffekt örtlich begrenzen.

## Claims

1. Sensor detecting a physical magnitude, comprising a mechanical resonator (2), adapted to be subjected to a mechanical stress representative of the magnitude to be measured, and means for causing the resonator to oscillate and maintaining its oscillations at a resonance frequency representative of the magnitude to be measured, characterized in that the resonator (2) is made from a solid laser material and said oscillation means comprise means (25-27) for feeding the laser resonator with a continuous pumping light beam.

2. The sensor according to claim 1, wherein the continuous light beam is fed to the resonator (2) by an optical fiber (26) and focussing means (27).

3. The sensor according to claims 1 and 2, wherein the axis of the continuous light beam is perpendicular to the vibration plane of the resonator (2).

4.  The sensor according to claims 1 to 3, wherein the resonator (2) comprises a beam (12) vibrating under flexion and comprising decoupling inertia blocks (13,14) adjacent the fixing ends (15,16) of the beam (12), and the continuous beam is focussed in the vicinity of one (14) of the inertia blocks, where the thermal stress produces maxiumum deformation.

5.  The sensor according to claims 1 to 4, wherein the resonator (2) is an aluminium and yttrium garnet crystal (YAG) doped with neodyme (Nd).

6.  The sensor as claimed in claim 5, wherein the continuous beam is emitted by a pumping laser diode (25) tuned to a transition of the absorption band of the $Nd^{3+}$ ion.

7.  The sensor according to claims 1 to 6, wherein the resonator (2) is covered with dichroic dielectric deposits (21,22) localizing the laser effect.

FIG.1

FIG.2

FIG.3